Europäisches Patentamt

European Patent Office

Office européen des brevets

(19)

(11) Publication number: **0 037 810**
**B1**

(12) **EUROPEAN PATENT SPECIFICATION**

(45) Date of publication of patent specification: **22.02.84**

(51) Int. Cl.³: **A 23 F 5/32, A 23 F 5/46**

(21) Application number: **80900568.9**

(22) Date of filing: **18.10.79**

(86) International application number:
**PCT/US79/00854**

(87) International publication number:
**WO 81/01094 30.04.81 Gazette 81/11**

(54) **AROMATIZED SOLUBLE COFFEE.**

(43) Date of publication of application:
**21.10.81 Bulletin 81/42**

(45) Publication of the grant of the patent:
**22.02.84 Bulletin 84/8**

(84) Designated Contracting States:
**AT CH DE FR GB LU NL SE**

(56) References cited:
FR - A - 1 529 082
FR - A - 2 438 432
US - A - 2 751 687
US - A - 3 573 060
US - A - 3 660 115
US - A - 3 672 917
US - A - 3 765 904
US - A - 3 814 826
US - A - 3 823 241

SIVETZ ET AL, COFFEE PROCESSING
TECHNOLOGY, 1963, THE AVI PUBLISHING
COMPANY, INC.: WESTPORT, CONNECTICUT,
U.S.A. VOLUME I- PAGES 240, 241, 244, 245;
VOLUME II-PAGES 138-141

(73) Proprietor: **GENERAL FOODS CORPORATION**
**250 North Street**
**White Plains, N.Y. 10625 (US)**

(72) Inventor: **HUDAK, Stephen Francis**
**15 Hillside Avenue**
**Croton-on-Hudson, NY 10520 (US)**
Inventor: **SALEEB, Fouad Zaki**
**15 Gregory Place**
**Pleasantville, NY (US)**

(74) Representative: **Baillie, Iain Cameron et al,**
**c/o Ladas & Parry Isartorplatz 5**
**D-8000 München 2 (DE)**

(56) References cited:
SPICER, ADVANCES IN PRECONCENTRATION
AND DEHYDRATION OF FOODS, 1974, JOHN
WILEY AND SONS: NEW YORK, PAGE 415

The file contains technical information
submitted after the application was filed and not
included in this specification

Aromatized soluble coffee

Technical field

The present invention pertains to soluble coffee and, more particularly, is directed to freeze-dried soluble coffee solids. Specifically, the invention is related to soluble coffee granules having a unique porosity which provides these granules with the capability of sorbing and retaining roasted and ground coffee aromatics and controllably releasing these aromatic volatiles.

Background art

Compared with roasted and ground coffee, the source material, soluble coffee has very little aroma.

Prior to the present invention, virtually all commercial soluble coffee products have been enhanced with aromas by combining the soluble coffee with pure coffee oil or aroma-enriched coffee oil in an endeavor to provide the soluble coffee product with an aromatic quality more akin to roasted and ground coffee (cf. U.S.A. Patent No. 3,148,070).

Aromatizing soluble coffee solids with coffee oil has several drawbacks. Many processing problems are encountered in recovering the oil from the roasted and ground coffee and, once obtained, the glyceride has a tendency to become rancid. Also, coffee oil, even in small amounts, adversely affects the flowability of soluble coffee granules and undesirable droplets of the oil can, and do, appear on the surface of the liquid beverages prepared from the oil-containing soluble coffee solids.

Prior suggestions, trials and other efforts directed toward aromatizing soluble coffee solids without the use of coffee oil as the aroma carrier have not, within present knowledge, met with commercial success. These attempts have been less than successful, for the most part, because of the inherent lack of sufficient affinity of conventionally produced soluble coffee solids for sorbing and retaining volatile coffee aromatics.

U.S. Patent 3,573,060 discloses a process in which the droplets of aqueous coffee extract are sprayed into a cryogenic fluid but only under such conditions that macroporous particles are obtained.

Disclosure of the invention

The thrust of the invention is the aromatization of soluble coffee products without the use of coffee oil. Surprisingly, it has been discovered that soluble coffee solids, produced under a condition which provides them with a unique porous structure, have an affinity of heretofore unrealized large magnitude for roasted and ground coffee aromas.

The porous soluble coffee particles of this invention not only have the capacity to sorb large quantities of volatile aromatics of roasted and ground coffee, but also have the capability to retain the aromatics for extended periods of time and subsequently to release the aromatics under controlled conditions.

These highly aromatized soluble coffee particles, when added in small amounts, and uniformly admixed with typical unaromatized soluble coffee solids, provide the composite product with the desirable fragrant aroma of freshly roasted and ground coffee.

The aromatized soluble coffee particles find their greatest utility as sorbent for roasted and ground coffee aromas which are to be released upon opening a jar of aroma-enhanced soluble coffee. When the jar is recapped, the uniquely porous particles controllably release additional aromas which permeate the contained remaining bulk product and void spaces. On reopening the jar, the aromas are further released to the atmosphere foretelling the consumer of an enjoyable beverage.

The essence of the invention resides in the discovery of a unique microporous structure which not only provides soluble coffee particles with available exposed internal surface areas for solid surface to vapor molecular attraction (adsorption of the roasted and ground coffee aroma vapors) but also the structure manifests micropores within a range of sizes which extensively sorb and retain roasted and ground coffee aromatics via capillary condensation. The molecular structures of the aromas "fit" and cooperate with the micropores to the extent the aromatics are releasably retained within the micropores substantially by capillary condensation forces and by some surface contact attracting forces.

Condensation of the aromas affords the micropores the capability of sorbing significant quantities of aromatics which are, subsequently, controllably released as vapors.

For purposes of this invention, the term "micropore" is intended to mean a pore having a radius of 1000 Å (100 nm) or less.

In order to produce a satisfactory and successful result within the precepts of the invention, it has been determined that the particles of soluble coffee to be intially aromatized with roasted and ground coffee aromas must have a porosity such that from 3 to 30 microliters per gram of the dry soluble coffee solids is comprised of micropores which have a radius of 150 Å (15 nm) or less. That is, the soluble coffee solids must have 0.3 to 3% (v/w) of useful pore space-pore space comprised of pores having a radius of 150 Å (15 nm) or less.

Inherently, when the soluble coffee solids are prepared so as to have from 0.3 to 3% (v/w) of the pore space comprised of pores having a radius of 150 Å (15 nm) or less (useful pore space for purposes of the invention), a gradation of pore sizes results with those pores having a radius of less than 30 Å (3 nm) most frequently occurring and contributing to the useful pore space.

The fact the useful pore space is comprised of pores of gradual sizes adds to the overall capability of the useful pore space to sorb and retain aromas associated with roasted and ground coffee. The aromas are a mixture of compounds of various molecular size and structure, each of which is preferentially sorbed and retained by capillary condensation in pores of a size most suitable for this purpose.

Those pores in the soluble coffee solids having a radius greater than 150 Å (15 nm) have been determined to be substantially incapable of sorbing any of the components of roasted and ground coffee aromas by capillary condensation and are, therefore, considered to be outside the useful range.

It has now been determined that from 0.05 to 20 milligrams of roasted and ground coffee aromas can be sorbed by capillary condensation per gram of dry coffee solids having a useful pore space of 0.3 to 3% (v/w). The specific amount of aromas sorbed is primarily a factor of the type aroma, the magnitude of the useful pore space, and the pore size distribution within the useful pore space.

Further, for those soluble coffee solids having a useful pore space of 30 microliters/gram of solids, when sorbing within each gram of soluble solids as much as 10 milligrams of dry aromas from roasted and ground coffee via capillary condensation, it has been determined that only 30—35% of the useful pore space is filled with aroma components.

The capillary condensation forces which sorb and retain the aromas have been determined to be less than the aroma vapor pressure forces striving to release the aroma from the useful pore space. Thus, upon confining a smal quantity of the aromatized soluble coffee solids within a closed container, the aroma will be driven from the solids in vapor form until an equilibrium partial vapor pressure is attained within the container. Upon opening the container the vaporized aroma is further released to the proximate atmosphere. Reclosing the cntainer brings about a second equilibrium condition. Thus it can be appreciated that a readily calculated small amount of aromatized microporous soluble coffee solids of the invention can be admixed and jarred with unaromatized conventional soluble coffee to provide sufficient roasted and ground aroma to pass from the aromatized solids into the headspace of the jar and be released each time the jar is uncapped.

Measurement of pore size and useful pore space

The porosity of a material is the ratio of the volume of the interstices of the material to the volume of its mass. To extend this definition to include the number of interstices (pores), their shape and size (particularly micropores), requires sophisticated measurement and calculation techniques.

The characteristics of the porosity of the dry soluble coffee solids for the present invention have been calculated from responses from model systems employing $CO_2$ and $N_2$ gases according to the well recognized and authoritative methods of S. Brunauer, "The Adsorption of Gases and Vapors" Vol. 1 Princeton University Press, 1945 and Barrett, E. P., et al. Journal American Chemical Society *73* 373 1951.

Best mode for carrying out the invention

The microporous particles of soluble coffee of the invention are prepared by shock freezing a concentrated coffee extract followed by freeze-drying the resultant frozen particles of extract.

Spraying an aqueous coffee extract, preferably, but not necessarily, having a soluble solids content less than 40% by weight, typically 25% to 35% by weight, into a cryogenic fluid having a temperature below −100°C, preferably liquid nitrogen, and subsequently freeze-drying the frozen particles of solution produces dry microporous soluble coffee solids having the required useful pore space whereof from 3 to 30 microliters per gram of the solids is comprised of micropores which have a radius of 150 Å (15 nm) or less.

The spray should preferably produce particles having an average particle size of below 200 micrometers diameter so that the entire particle will be instantaneously frozen on contact with the cryogenic fluid.

It is not strictly essential the particle be formed from a spray of the particle size or below 200 $\mu$m—what is essential is the rapidity at which all of the moisture within the particle freezes.

It is believed that rapid freezing, approaching instantaneous, forms minute ice crystals exclusively throughout the particle. To assure this condition, the cryogenic fluid should have a temperature of −100°C or below.

The moisture content of the shock frozen particles of concentrated coffee extract which is in the form of minute ice crystals is sublimed from the particles to yield solid coffee granules with the microporous structure of the invention. It is essential that moisture removal be accomplished substantially completely by sublimation (no liquid water present) to produce the desirable pore structure. Also, freeze-drying processing conditions must be carefully controlled to insure there is insignificantly little, or no melting of the ice crystals during dehydration of the frozen coffee extract particles.

The aromas associated with roasted and ground coffee, whether natural or synthetic, may be derived from many sources well-known to those skilled in the art. Depending on the method of contact to be employed, the aromas may be present as a component of a gas, a liquid condensate or a condensed frost.

The method of contacting the microporous particles with roasted ground coffe aromatics for the purpose of sorbing aroma within the particles can also be many and varied. The use of high pressure and/or low particle temperatures may be employed in order to maximize the quantity of aroma sorbed or to shorten the period of time required to achieve a desired level of aromatization; however, such conditions are not usually required.

Among the techniques useful to date for the sorption of aromatics by the porous soluble coffee particles, the most preferable is to contact the microporous particles of soluble coffee with grinder gas frost (frozen roasted and ground aromatics plus frozen $CO_2$ obtained during the grinding of the roasted coffee).

This is accomplished by placing both the porous particles and condensed $CO_2$ aroma frost well mixed in a vented vessel, preferably above −40°C, and permitting the $CO_2$ portion of the frost to sublime.

The microporous coffee granules of the invention have the capability of sorbing as much as 2% (w/w) of roasted and ground coffee aroma. This is, in general, in excess of that which is required and, depending on how the aromatized soluble coffee solids are utilized, the aromatized particles will contain aromatics at a level of from 0.05 to 20 milligrams per gram of solids.

When the level of aromatics sorbed is 1 milligram/gram of aromatized solids, it requires about 5 grams of aromatized solids to be admixed with 95 grams of conventional soluble coffee to provide sufficient headspace aroma in the jar for release each time the jar is uncapped throughout the average periodic use of the beverage-making product.

Since it has been determined to be more preferable to admix 2% or less of aromatized microporous soluble coffee solids with the conventional soluble coffee, the aromatized mixture should preferably contain aromatics at a level of 0.2 to 0.5% (w/w).

If the aromatized microporous soluble coffee granules are present in the product of the invention in excess quantity, they provide desirable flavor effects to the liquid beverage upon reconstitution of the granules with hot water.

As stated before, during storage of the aromatized soluble coffee granules admixed with the bulk unaromatized materials, the sorbed aromatics exert a vapor pressure which overcomes the porosity binding forces and a small quantity of aroma is released until a partial vapor pressure equilibrium condition exists within the jar. Upon opening the jar, the aroma is further released to the atmosphere foretelling the consumer of an enjoyable beverage.

Upon capping the jar, the aroma-retention and releasing processes are repeated. Thus, the inventive granules are capable of sorbing, retaining, and releasing roasted and ground coffee aromas to produce desirable soluble coffee jar package "headspace" aroma.

Example

An aqueous coffee extract having a soluble solids content of 33% by weight was prepared by reconstituting spray dried coffee solids. This extract was sprayed into an open vessel containing liquid nitrogen whereupon the particles of extract immediately froze and were dispersed. The extract was sprayed by means of a two-fluid, glass atomizing nozzle (a chromatographic nozzle obtained from SGA Scientific, Inc., Fullerton, California) using air as the pressurizing fluid. The liquid nitrogen and particle mixture was poured into freeze drier trays, and the liquid nitrogen was allowed to boil off leaving behind a flat bed of frozen particles about 1.16 to 3.2 mm in thickness. The trays were placed in a freeze drier and subjected to a vacuum of 10 microns of Hg and a plate temperature of 50°C for a period of 18 hours. The vacuum on the freeze drier was broken with dry $CO_2$ and the dry particles having a moisture content of below 1.5% were removed from the freeze drier and kept out of contact of moisture. The dry particles were found to have a microporous structure such that 30 microliters per gram of coffee solids of the pore space were comprised of pores having a radius of 150 Å (15 nm) or less with the most frequently occurring pore size within the useable pore space being less than 30 Å (3 nm).

The dry particles were subsequently chilled in dry ice under a dry atmosphere and mixed with coffee grinder gas frost, having a moisture content between 10 and 15% by weight, at a weight ratio of 0.2 parts frost per part particle. The mixture was transferred to a prechilled jar having a pinhole vent, and the jar was stored at 0°F (−18°C) overnight during which time $CO_2$ was evolved. The chilled particles, having a moisture content of below 6% by weight, were then packaged in glass jars with unplated, agglomerated spray-dried coffee solids at the level of 0.75% by weight of spray-dried solids. The resulting jars were then stored at 95°F (35°C) for periods of eight weeks. Upon initial opening and during a standard 7-day, in-use cycle, a pleasing headspace aroma was found which was rated as being at least as good as the headspace aroma possessed by jars of comparably stored, aromatized, agglomerated spray-dried coffee which coffee had been plated with grinder gas-enriched coffee oil. This oil-plated sample was prepared in accordance with U.S. Patent No. 4,119,736 using an amount of grinder gas frost for each weight unit of soluble product comparable to that employed in the inventive sample.

As previously noted, jar aroma has been provided to commercial soluble coffee products by means of oil plating an aroma-bearing glyceride (e.g. coffee oil onto soluble powder). It has also been contemplated to absorb coffee aromatics onto oil-plated soluble coffee, and this technique is expressly disclosed in U.S. Patent No. 3,823,241 to Patel et al. It has, however, not previously been thought possible to sorb high levels of aromatics directly onto soluble coffee solids such that the aromatics would be retained. The Patel et al. patent notes the criticality of the oil so that upon successive openings of the soluble coffee package (i.e., in-use cycle), the consumer will continued to perceive a jar aroma. This is in fact the situation for the conventional spray-dried, foam-dried and freeze-dried products dealt with in the Patel et al. patent. However, the same deficiency does not exist with microporous soluble coffee particles having a useable pore space as described for this invention. As previously noted, conventional spray-dried coffee does not possess a microporous structure; while in conventional freeze-dried coffee, most of the pore radii are on the order of 10,000 Å (1000 nm) and the useable pore space (pores having a radius of 150 Å (15 nm) or less) is isnificantly small or entirely absent.

Industrial applicability

The microporous soluble coffee granules of the invention find their greatest utility as sorbent for roasted and ground coffee aromas which are to be released upon opening of jar of soluble coffee. The inventive product has no coffee oil as the aroma sorbent and thereby avoids the processing and physiological difficulties encountered with the glyceride. In this respect alone, the inventive soluble coffee product comprising packaged low or now aroma-containing soluble coffee admixed with a small amount of highly aroma-enhanced microporous soluble coffee granules represents a major technical advance in the art of soluble coffee manufacturing, particularly in view of the fact the aromas sorbed by the microporous granules have excellent stability during prolonged storage under inert conditions such as those which normally exist in packaged soluble coffee products.

**Claims for the contracting states: CH DE FR GB LU NL SE**

1. Freeze-dried microporous soluble coffee solids characterized by having 3 to 30 microliters of pore space per gram of solids composed of pores having a radius of 150 Å (15 nm) or less, said pores function to sorb gaseous volatiles and aromatices via capillary condensation thereby converting the gaseous sorbate into a liquid within said pore.

2. The microporous soluble coffee solids of claim 1, wherein the most frequently occurring pores composing 3 to 30 microliters of pore space are pores having a radius of less than 30 Å (3 nm).

3. The microporous soluble coffee solids of claims 1 or 2 having from 0.1 to 2% (w/w) of capillary condensed aromas releasably contained in the pores having a radius of 150 Å (15 nm) or less which constitutes 3 to 30 microliters of pore space per gram of solids.

4. A soluble coffee powder enhanced with roasted and ground coffee aromas, the soluble coffee powder having admixed therewith in amount of from 0.1 to 5% by weight of the soluble coffee powder, an aroma-enriched microporous soluble coffee sorbent having 3 to 30 microliters of pore space per gram of sorbent consisting of pores having a radius of 150 Å (15 nm) or less.

5. A soluble coffee powder according to claim 4, wherein the most frequently occurring pores composing 3 to 30 microliters of pore space are pores having a radius of less than 30 Å (3 nm).

6. A soluble coffee powder according to claim 4 or 5 wherein the sorbent has from 0.2% to 1% by weight sorbed roasted and ground coffee aromas.

7. A soluble coffee powder according to claim 4 or 5 packaged within a reclosable container.

8. A method of preparing freeze-dried soluble coffee solids having 3 to 30 microliters of pore space per gram of solids composed of pores having a radius of 150 Å (15 nm) or less in which an aqueous coffee extract is sprayed into a cryogenic fluid having a temperature of −100°C, and below, and the frozen particles are freeze-dried.

9. Method according to claim 8, wherein droplets of the sprayed aqueous coffee extract have an average size of below 200 micrometers diameter.

10. Method according to claim 8 or 9 wherein the aqueous coffee extract has a soluble solids content less than 40% by weight.

11. Method according to claim 8, wherein the cryogenic fluid is liquid nitrogen.

12. Method of providing a headspace aroma to a package of soluble coffee powder, comprising mixing the soluble coffee powder with an amount of from 0.1 to 5% by weight of the soluble coffee powder, of an aroma-enriched microporous soluble coffee sorbent having 3 to 30 microliters of pore space per gram of sorbent consisting of pores having a radius of 150 Å (15 nm) or less which is enriched with from 0.2% to 1% by weight sorbed roasted and ground coffee aromas, and packaging the soluble coffee powder and the admixed sorbent the roasted and ground coffee aromas passing gradually from the sorbent to the headspace whereby upon opening of the package coffee aroma volatiles released from the headspace are detected.

**Claims for the contracting state: AT**

1. A method of preparing freeze-dried soluble coffee solids having 3 to 30 microliters of pore space per gram of solids composed of pores having a radius of 150 Å (15 nm) or less in which an aqueous coffee extract is sprayed into a cryogenic fluid having a temperature of —100°C, and below, and the frozen particles are freeze-dried.

2. A method according to claim 1 characterized in that said aqueous extract has a soluble solids content less than 40 weight percent.

3. A method according to claim 1 or 2 characterized in that said cryogenic liquid is liquid nitrogen.

4. A method according to any of claims 1 to 3 characterized in that the spray is composed of droplets having an average diameter less than 200 micrometers.

5. A method according to any one of claims 1 to 4 characterized in that the freeze-drying is effected substantially exclusively by sublimation.

6. A method according to any of the preceding claims further characterized by releasably depositing, by capillary condensation, from 0.1 to 2 weight percent of roasted and ground coffee aromas on said soluble coffee solids.

7. A method according to claim 6 characterized in that said coffee aromas are utilized in the form of grinder gas frost and the $CO_2$ in said frost is subsequently sublimed.

8. Method of providing a headspace aroma to a package of soluble coffee powder, comprising mixing the soluble coffee powder with an amount of from 0.1 to 5% by weight of the soluble coffee powder, of an aroma-enriched microporous soluble coffee sorbent having 3 to 30 microliters of pore space per gram of sorbent consisting of pores having a radius of 150 Å (15 nm) or less which is enriched with from 0.2% to 1% by weight sorbed roasted and ground coffee aromas, and packaging the soluble coffee powder and the admixed sorbent, the roasted and ground coffee aromas passing gradually from the sorbent to the headspace whereby upon opening of the package coffee aroma volatiles released from the headspace are detected.

**Patentansprüche für die Vertragsstaaten: CH DE FR GB LU NL SE**

1. Gefriergetrocknete, mikroporöse, lösliche Kaffee-Festkörper, dadurch gekennzeichnet, daß sie pro Gramm Festkörper 3 bis 30 Mikroliter eines Porenvolumens haben, das aus Poren mit einem Radius von höchstens 15 nm besteht, wobei diese Poren bewirken, daß gasförmige flüchtige Stoffe und Aromastoffe durch Kapillarkondensation aufgenommen und dadurch das gasförmige Sorbat in der Pore in eine Flüssigkeit umgewandelt wird.

2. Mikroporöse lösliche Kaffee-Festkörper nach Anspruch 1, dadurch gekennzeichnet, daß in dem Porenvolumen von 3 bis 30 Mikrolitern die am häufigsten vorkommenden Poren einen Radius unter 3 nm haben.

3. Mikroporöse lösliche Kaffee-Festkörper nach Anspruch 1 oder 2, in denen in den Poren mit einem Radius von höchstens 15 nm, die ein Porenvolumen von 3 bis 30 Mikrolitern pro Gramm Festkörper bilden, 0,1 bis 2 Gew.-Gew.% kapillarkondensierte Aromastoffe wiederabgebbar enthalten sind.

4. Lösliches Kaffeepulver, das mit Aromastoffen von geröstetem und gemahlemem Kaffee versetzt ist, wobei dem löslichen Kaffeepulver in einer Menge von 0,1 bis 5 Gew.% des löslichen Kaffeepulvers ein Sorbens in Form eines aromaverstärkten, mikroporösen löslichen Kaffees beigemischt ist, das pro Gramm Sorbens ein Porenvolumen von 3 bis 30 Mikroliter enthält, das aus Poren mit einem Radius von höchstens 15 nm besteht.

5. Lösliches Kaffepulver nach Anspruch 4, dadurch gekennzeichnet, daß in dem Porenvolumen von 3 bis 30 Mikrolitern die am häufigsten vorkommenden Poren einen Radius unter 3 nm haben.

6. Lösliches Kaffepulver nach Anspruch 4 oder 5, dadurch gekennzeichnet, daß das Sorbens 0,2 bis 1 Gew.% Aromastoffe von geröstetem und gemahlenem Kaffee sorbiert enthält.

7. Lösliches Kaffeepulver nach Anspruch 4 oder 5, das in einem wiederschließbaren Behälter verpackt ist.

8. Verfahren zum Herstellen von gefriergetrockneten löslichen Kaffee-Festkörpern, die pro Gramm Festkörper ein Porenvolumen von 3 bis 30 Mikrolitern haben, das aus Poren mit einem Radius von höchstens 15 nm besteht, dadurch gekennzeichnet, daß ein wässeriger Kaffeeextrakt in ein Gefriermittel gesprüht wird, das sich auf einer Temperatur von höchstens —100°C befindet, und die gefrorenen Teilchen gefriergetrocknet werden.

9. Verfahren nach Anspruch 8, dadurch gekennzeichnet, daß die Tröpfchen des gesprühten wässerigen Kaffeeextrakts eine durchschnittliche Größe unter 200 μm besitzen.

10. Verfahren nach Anspruch 8 oder 9, dadurch gekennzeichnet, daß der wässerige Kaffeeextrakt eine löslichen Feststoffgehalt von weniger als 40 Gew.% hat.

11. Verfahren nach Anspruch 8, dadurch gekennzeichnet, daß das Gefriermittel Flüssigstickstoff ist.

12. Verfahren zum Erzeugen eines Kopfraumaromas in einer Packung mit löslichem Kaffeepulver, in dem dem löslichen Kaffeepulver in einer Menge von 0,1 bis 5 Gew.% des löslichen Kaffeepulvers ein Sorbens in Form eines aromaverstärkten, mikroporösen löslichen Kaffees beigemischt wird, das pro Gramm Sorbens ein Porenvolumen von 3 bis 30 Mikroliter enthält, das aus Poren mit einem Radius von höchstens 15 nm besteht, und das mit 0,2 bis 1 Gew.% sorbierten Aromastoffen von geröstetem und gemahlenem Kaffee angereichert ist, und das lösliche Kaffeepulver und das ihm beigemischte Sorbens verpackt werden, so daß die Aromastoffe von geröstetem und gemahlenem Kaffee allmählich aus dem Sorbens in den Kopfraum gelangen und beim Öffnen der Packung flüchtige Kaffeearomastoffe wahrgenommen weren, die áus dem Kopfraum ausgetreten sind.

## Patentansprüche für der Vertragsstaat: AT

1. Verfahren zum Herstellen von gefriergetrockneten löslichen Kaffee-Festkörpern, die pro Gramm Festkörper ein Porenvolumen von 3 bis 30 Mikrolitern haben, das aus Poren mit einem Radius von höchstens 15 nm besteht, dadurch gekennzeichnet, daß ein wässeriger Kaffeextrakt in ein Gefriermittel gesprüht wird, das sich auf einer Temperatur von höchstens −100°C befindet, und die gefrorenen Teilchen gefriergetrocknet werden.

2. Verfahren nach Anspruch 1, dadurch gekennzeichnet, daß der wässerige Extrakt einen löslichen Feststoffgehalt von weniger als 40 Gew.% hat.

3. Verfahren nach Anspruch 1 oder 2, dadurch gekennzeichnet, daß das Gefriermittel Flüssigstickstoff ist.

4. Verfahren nach einem der Ansprüche 1 bis 3, dadurch gekennzeichnet, daß die Tröpfchen des gesprühten wässerigen Kaffeeextrakts eine durchschnittliche Größe unter 200 $\mu$m besitzen.

5. Verfahren nach einen der Anspruch 1 bis 4, dadurch gekennzeichnet, daß das Gefriertrocknen im wesentlichen ausschließlich durch Sublimation bewirkt wird.

6. Verfahren nach einem der vorhergehenden Ansprüche, dadurch gekennzeichnet, daß auf den löslichen Kaffee-Festkörpern durch Kapillarkondensation 0,1 bis 2 Gew.% Aromastoffe von geröstetem und gemahlenem Kaffee so abgelargert werden, daß sie wiederabgegeben werden können.

7. Verfahren nach Anspruch 6, dadurch gekennzeichnet, daß die Kaffeearomastoffe in Form von Gefriergut aus beim Mahlen von Kaffee angefallenem und Gaskondensat verwendet werden und das in dem Gefriergut enthaltene $CO_2$ später sublimiert wird.

8. Verfahren zum Erzeugen eines Kopfraumaromas in einer Packung mit löslichen Kaffeepulver, in dem dem löslichen Kaffeepulver in einer Menge von 0,1 bis 5 Gew.% des löslichen Kaffeepulvers ein Sorbens in Form eines aromaverstärkten, mikroporösen löslichen Kaffees beigemischt wird, das pro Gramm Sorbens ein Porenvolumen von 3 bis 30 Mikroliter enthält, das aus Poren mit einem Radius von höchstens 15 nm besteht, und das mit 0,2 bis 1 Gew.% sorbierten Aromastoffen von geröstetem und gemahlenem Kaffee angereichert ist, und das lösliche Kaffeepulver und das ihm beigemischte Sorbens verpackt werden, so daß die Aromastoffe von geröstetem und gemahlenem Kaffee allmählich aus dem Sorbens in den Kopfraum gelangen und beim Öffnen der Packung flüchtige Kaffeearomastoffe wahrgenommen werden, die aus dem Kopfraum ausgetreten sind.

## Revendications pour les Etats contractants: CH, DE, FR, GB, W, NL, SE

1. Solides de café soluble microporeux lyophilisés, caractérisés en ce qu'ils ont 3 à 30 microlitres de volume de pores par gramme de solides composés de pores ayant un rayon de 150 Å (15 nm) ou moins, lesdits pores agissant pour adsorber des produits volatils et aromates gazeux par condensation capillaire transformant par là l'adsorbant gazeux en un liquide présent dans ledit pore.

2. Solides de café soluble microporeux de la revendication 1, caractérisés en ce que les pores apparaissant le plus fréquemment composant 3 à 30 microlitres de volume de pores sont des pores ayant un rayon de moins de 30 Å (3 nm).

3. Solides de café soluble microporeux de la revendication 1 ou 2, caractérisés en ce qu'ils ont 0,1 à 2% (poids/poids) d'arômes de condensation capillaire contenus de manière libérable dans les pores ayant un rayon de 150 Å (15 nm) ou moins, ce qui constitue 3 à 30 microlitres de volume de pores par gramme de solides.

4. Poudre de café soluble renforcée avec des arômes de café grillé et moulu, caractérisée en ce qu'elle comporte en mélange à raison de 0,1 à 5% en poids de la poudre de café soluble, un adsorbant de café soluble microporeux enrichi en arôme ayant 3 à 30 microlitres de volume de pores par gramme d'adsorbant constitués par des pores ayant un rayon de 150 Å (15 nm) ou moins.

5. Poudre de café soluble selon la revendication 4, caractérisée en ce que les pores apparaissant le plus fréquemment composant 3 à 30 microlitres de volume de pores sont des pores ayant un rayon de moins de 30 Å (3 nm).

6. Poudre de café soluble selon la revendication 4 ou 5, caractérisée en ce que l'adsorbant possède de 0,2 à 1% en poids d'arômes grillés et moules adsorbés.

7. Poudre de café soluble selon la revendication 4 ou 5, emballée dans un récipient refermable.

8. Procédé de préparation de solides de café soluble lyophilisés ayant 3 à 30 microlitres de volume de pores par gramme de solides composés de pores ayant un rayon de 150 Å (15 nm) ou moins caractérisé en ce qu'on pulvérise un extrait de café aqueux dans un fluide cryogénique ayant une température de −100°C, et au-dessous, et l'on lyophilise les particules congelées.

9. Procédé selon la revendication 8, caractérisé en ce que les gouttelettes de l'extrait de café aqueux pulvérisé ont une grosseur moyenne de moins de 200 micromètres de diamètre.

10. Procédé selon la revendication 8 ou 9, caractérisé en ce que l'extrait de café aqueux a une teneur en solides solubles inférieure à 40% en poids.

11. Procédé selon la revendication 8, caractérisé en ce que le fluide cryogénique est de l'azote liquide.

12. Procédé de fourniture d'un arôme d'espace supérieur à un paquet de poudre de café soluble, caractérisé en ce qu'on mélange la poudre de café soluble avec une quantité de 0,1 à 5% en poids de la poudre de café soluble, d'un adsorbant de café soluble enrichi en arôme ayant 3 à 30 microlitres de volume de pores par gramme d'adsorbant constitués par des pores ayant un rayon de 150 Å (15 nm) ou moins qui est enrichi avec 0,2 à 1% en poids d'arômes de café grillé et moulu adsorbés, et on emballe la poudre de café soluble et l'adsorbant mélangé, les arôme de café grillé et moulu passant graduellement de l'adsorbant dans l'espace supérieur, ce qui fait qu'à l'ouverture de l'emballage, on décèle les produits volatils d'arôme de café libérés à partir de l'espace supérieur.

## Revendications pour l'Etat Contractant: AT

1. Procédé de préparation de solides de café soluble lyophilisés ayant 3 à 30 microlitres de volume de pores par gramme de solides composés de pores ayant un rayon de 150 Å (15 nm) ou moins, caractérisé en ce qu'on pulvérise un extrait de café aqueux dans un fluide cryogénique ayant une température de —100°C, et au-dessous, et l'on lyophilise les particules congelées.

2. Procédé selon la revendication 1, caractérisé en ce que l'extrait aqueux a une teneur en solides solubles inférieure à 40 en poids pourcent.

3. Procédé selon les revendications 1 ou 2, caractérisé en ce que le liquide cryogénique est de l'azote liquide.

4. Procédé selon l'une quelconque des revendications 1 à 3, caractérisé en ce que la pulvérisation est constituée de gouttelettes ayant un diamètre moyen inférieur à 200 micromètres.

5. Procédé selon l'une quelconque des revendications 1 à 4, caractérisé en ce que la lyophilisation est effectuée pratiquement exclusivement par sublimation.

6. Procédé selon l'une quelconque des revendications précédentes, caractérisé en ce que l'on dépose de manière libérable, par condensation capillaire, de 0,1 à 2% en poids d'arômes de café moulu et grillé sur les solides de café soluble.

7. Procédé selon la revendication 6, caractérisé en ce que lesdits arômes de café sont utilisés sous forme de givre de gaz de mouture et le $CO_2$ dudit givre est pratiquement sublimé.

8. Procédé de fourniture d'un arôme d'espace supérieur à un paquet de poudre de café soluble, caractérisé en ce qu'on mélange la poudre de café soluble avec une quantité de 0,1 à 5% en poids de la poudre de café soluble, d'un adsorbant de café soluble enrichi en arôme ayant 3 à 30 microlitres de volume de pores par gramme d'adsorbant constitués par des pores ayant un rayon de 150 Å (15 nm) ou moins qui est enrichi avec 0,2 à 1% en poids d'arômes de café grillé et moulu adsorbés, et on emballe la poudre de café soluble et l'adsorbant mélangé, les arômes de café grillé et moulu passant graduellement de l'adsorbant dans l'espace supérieur, ce qui fait qu'à l'ouverture de l'emballage on décèle les produits volatils d'arôme de café libérés à partir de l'espace supérieur.